# EUROPÄISCHE PATENTSCHRIFT

(11) **EP 3 970 250 B1**
(45) Veröffentlichungstag und Bekanntmachung des Hinweises auf die Patenterteilung: **02.08.2023**
(21) Anmeldenummer: 20735068.7
(22) Anmeldetag: 10.06.2020
(51) Int. Cl.: H02B 13/035, H02B 1/56, H01H 33/66

(54) **SCHALTEINRICHTUNG**
SWITCHGEAR
DISPOSITIF COMMUTATEUR

(30) Priorität: 04.07.2019 DE 102019209875
(43) Veröffentlichungstag der Anmeldung: 23.03.2022
(73) Patentinhaber: Siemens Energy Global GmbH & Co. KG, 81739 München (DE)
(72) Erfinder: BAUER, Sascha, 10318 Berlin (DE); EHRLICH, Frank, 16562 Hohen Neuendorf (DE); RADEMACHER, Rico, 14974 Ludwigsfelde (DE); REIHER, Ingolf, 12205 Berlin (DE)
(86) Internationale Anmeldenummer: PCT/EP2020/066031
(87) Internationale Veröffentlichungsnummer: WO 2021/001124

(56) Entgegenhaltungen:
- EP-A1- 0 348 313
- DE-A1-102014 209 634
- DE-U1- 9 316 832
- FR-A1- 2 346 884
- JP-A- H08 223 719

## Beschreibung

Die Erfindung betrifft eine Schalteinrichtung aufweisend eine von einem Kapselungsgehäuse umgebene Unterbrechereinheit mit einer Schaltstelle, die zwischen einer ersten Anschlussseite und einer zweiten Anschlussseite angeordnet ist, wobei sich ein erster Phasenleiter von der ersten Anschlussseite zu einem Isolator erstreckt und sich ein zweiter Phasenleiter von der zweiten Anschlussseite zu einem Isolator erstreckt.

Aus der Offenlegungsschrift DE 10 2012 206 084 A1 ist eine Schalteinrichtung bekannt, welche ein Kapselungsgehäuse aufweist. Das Kapselungsgehäuse umgibt eine Unterbrechereinheit mit einer Schaltstelle. Die Schaltstelle ist zwischen einer ersten Anschlussseite und einer zweiten Anschlussseite angeordnet. Um die Unterbrechereinheit elektrisch zu kontaktieren, sind an der ersten Anschlussseite ein erster Phasenleiter sowie an der zweiten Anschlussseite ein zweiter Phasenleiter vorgesehen. Die Phasenleiter erstrecken sich dabei von der jeweiligen Anschlussseite zu einem elektrischen Isolator. Die vorgesehenen Kontaktierungen der Phasenleiter mit der jeweiligen Anschlussseite sowie mit den Isolatoren erweisen sich sowohl in der Montage als auch in der Demontage als nachteilig. Oftmals sind die Verbindungsstellen der Anschlussseiten nicht unmittelbar zugänglich, so dass sich insbesondere im Servicefall umfangreiche Demontagearbeiten innerhalb Kapselungsgehäuse nicht vermeiden lassen.

Weiter sind den Dokumenten FR 2 346 884 A1, DE 10 2014 209 634 A1, EP 0 348 313 A1 sowie JP H08 223719 A jeweils Schalteinrichtungen entnehmbar, die eine von einem Kapselungsgehäuse umgebene Unterbrechereinheit mit einer Schaltstelle aufweisen.

Dem Dokument DE 93 16 832 U1 ist ein Kapselungsgehäuse entnehmbar, in dessen Inneren Leiterverbinder angeordnet sind.

Somit ergibt sich als Aufgabe der Erfindung eine Schalteinrichtung anzugeben, welche in einfacher Weise montier- und demontierbar ist.

Erfindungsgemäß wird die Aufgabe bei einer Schalteinrichtung der eingangs genannten Art dadurch gelöst, dass die erste und die zweite Anschlussseite eine Phasenleiteraufnahme mit einer in einer axialen Richtung den jeweiligen Phasenleiter überspannenden Schulter aufweist und die Schulter der ersten Anschlussseite von flankierenden Barrieren begrenzt ist, wobei zwischen Schulter und Barrieren ein Anlagefläche für den ersten Phasenleiter angeordnet ist.

Die Unterbrechereinheit einer Schalteinrichtung dient einem Unterbrechen beziehungsweise Durchschalten eines Phasenleiterzuges. Teil des Phasenleiterzuges ist ein erster Phasenleiter, der mit der ersten Anschlussseite der Unterbrechereinheit verbunden ist. Weiterhin weist der Phasenleiterzug einen zweiten Phasenleiter auf, welcher mit einer zweiten Anschlussseite der Unterbrechereinheit verbunden ist. Zwischen den Anschlussseiten der Unterbrechereinheit ist eine Schaltstelle derselben angeordnet. Die Schaltstelle kann dabei eine elektromechanische Schaltstelle sein, welche durch eine Relativbewegung von Schaltkontaktstücken die Impedanz der Schaltstelle verändert und so ein Durchschalten beziehungsweise ein Auftrennen des Phasenleiterzuges ermöglicht. Darüber hinaus kann für eine Schaltstelle ein halbleitendes Bauteil eingesetzt werden, welches je nach Ansteuerung einem Durchschalten beziehungsweise Unterbrechen des Phasenleiterzuges dient. Als Schaltstelle haben sich beispielsweise so genannte Vakuumschaltröhren als geeignet erwiesen, welche relativ zueinander bewegbare Schaltkontaktstücke aufweisen, die in einer evakuierten Röhre angeordnet sind. Dadurch wird die Umgebung der Schaltkontaktstücke von Ladungsträgern befreit, so dass ein verbessertes Schaltverhalten der Schaltkontaktstücke der Schaltstelle zu beobachten ist. Darüber hinaus können jedoch auch herkömmliche fluiddurchflutete Schaltstellen eingesetzt werden, die beispielsweise mit einem spezifischen elektrisch isolierenden Fluid umspült werden beziehungsweise ggf. auch die Schaltstelle selbst durchspülen. Dazu kann das Kapselungsgehäuse beispielsweise hermetisch abschließend ausgebildet sein, so dass das Innere des Kapselungsgehäuses mit einem elektrisch isolierenden Fluid befüllbar ist und das Kapselungsgehäuse einem Verflüchtigen des Fluides entgegenwirkt. Dabei können Isolatoren, welche mit einem Phasenleiter verbunden sind, einem fluiddichten Verschluss des Kapselungsgehäuses dienen, so dass ein Phasenleiterzug elektrisch isoliert in das Innere des Kapselungsgehäuses einführbar beziehungsweise aus dem Inneren des Kapselungsgehäuses herausführbar ist. Somit ist die Schalteinrichtung auch in ein Elektroenergieübertragungsnetz einbindbar. Bei den Isolatoren kann es sich um so genannte Durchführungsisolatoren verschiedenartigster Bauweisen handeln. Als geeignet haben sich beispielsweise scheibenförmige Isolatoren, in welche Kontaktstücke fluiddicht eingesetzt sind, erwiesen. Bedarfsweise können die Phasenleiter, welche sich zwischen einer Anschlussseite und einen Isolator erstrecken, ein- oder mehrteilig ausgeformt sein. Somit besteht die Möglichkeit, modulare Phasenleiter auszubilden, die in verschiedenen Anlagen gleichartig verwendet werden.

Innerhalb eines Kapselungsgehäuses können auch mehrere bevorzugt gleichartig aufgebaute Unterbrechereinheiten angeordnet sein. So können beispielsweise mehrere Pole über mehrere voneinander elektrisch isolierten Unterbrechereinheiten innerhalb ein und desselben Kapselungsgehäuses geschaltet werden. Bevorzugte können die Unterbrechereinheiten bezüglich einer Längsachse (axiale Erstreckung) an den Eckpunkten eines Dreiecks angeordnet sein, so dass eine effiziente Nutzung des Inneren eines Kapselungsgehäuses ermöglicht wird. Die erste sowie die zweite Anschlussseite können beispielsweise durch eine erste beziehungsweise zweite Armatur der Unterbrechereinheit gebildet sein. Eine Armatur kann beispielsweise dazu dienen, die Schaltstelle zu positionieren und zwischen den Anschlussseiten aufzunehmen. So ist es beispielsweise möglich, dass die Armatur der ersten Anschlussseite sowie die Armatur der zweiten Anschlussseite jeweils eine Stirnseite einer Vakuumschaltröhre begrenzen und dieselbe positionieren. Jede der Anschlussseiten kann winkelstarr mit dem jeweils zugeordneten ersten beziehungsweise zweiten Phasenleiter verbunden sein, so dass zwischen der Unterbrechereinheit beziehungsweise der jeweiligen Anschlussseite sowie dem Phasenleiter ein winkelstarrer Verbund gebildet ist. Zumindest eine der Anschlussseiten, z.B. die erste Anschlussseite, weist in axialer Richtung den jeweiligen Phasenleiter überspannende Schulter auf. Die axiale Richtung verläuft dabei bevorzugt in Richtung eine Längsachse der Unterbrechereinheit. Die Längsachse ist dabei bevorzugt dadurch definiert, dass die größte Erstreckung der Unterbrechereinheit entlang der Längsachse verläuft. Weiterhin kann bei einer Nutzung relativ zueinander bewegbarer Schaltkontaktstücke eine Bewegung der Schaltkontaktstücke bevorzugt in axialer Richtung relativ zueinander erfolgen.

Durch die Schulter wird für den jeweiligen Phasenleiter ein Anschlag gebildet, an welchem bei einem Zusammenfügen von Phasenleiter und Unterbrechereinheit eine Positionierung und Festlegung der Relativlage von Phasenleiter und Anschlussseite vorgenommen werden kann. Durch ein Flankieren der Schulter mittels Barrieren ist die Zuführrichtung beziehungsweise Einfahrrichtung des Phasenleiters an die Schulter definiert. Bevorzugt kann durch die Barriere eine Linearführung in der Phasenleiteraufnahme erfolgen, mittels welcher ein Phasenleiter relativ zu der Schulter hingeführt wird. Die Schulter kann dabei bevorzugt der Formgebung des Phasenleiters entsprechen. Beispielsweise kann bei einer mantelseitigen Umgreifung des Phasenleiters mittels Schultern und Barrieren eine gekrümmte Schulter vorgesehen sein, welche bevorzugt in parallel linear zueinander angeordnete Barrieren übergeht. Somit kann ein "Schuh" an einer Anschlussseite gebildet werden, in welche der jeweilige Phasenleiter hineinführbar ist. Bevorzugt können auch sowohl die erste als auch die zweite Anschlussseite entsprechende Schultern und Barrieren aufweisen. Dabei können die Form und Ausgestaltung von Schulter und Barrieren an der ersten und zweiten Anschlussseite identisch ausgebildet sein. Es kann jedoch auch vorgesehen sein, dass voneinander abweichende Ausbildungen von Schulter und Barrieren an der ersten sowie der zweiten Anschlussseite vorgenommen sind. Ein Zusammenbringen eines Phasenleiters und einer Unterbrechereinheit kann derart erfolgen, dass die Unterbrechereinheit (bzw. die jeweilige Anschlussseite) zu dem Phasenleiter hinbewegt wird oder umgekehrt. Ggf. können auch sowohl eine Anschlussseite als auch ein Phasenleiter aufeinander zubewegt werden.

Eine weitere vorteilhafte Ausgestaltung kann vorsehen, dass die Schultern der ersten und der zweiten Anschlussseite in axialer Richtung die jeweiligen Phasenleiter gleichsinnig überspannen.

Die Schultern der ersten und zweiten Anschlussseite überspannen den jeweiligen Phasenleiter, so dass der unterhalb der jeweiligen Schulter liegende Fügespalt durch die Schulter geschirmt ist. Dabei sind die Schultern bezüglich des jeweiligen Phasenleiters derart angeordnet, dass diese gleichsinnig den Phasenleiter überspannen. Dies ermöglicht eine vereinfachte Montage und Demontage, da ein Zuführen der Phasenleiter zu der jeweiligen Anschlussseite (und umgekehrt) aus der gleichen Richtung erfolgen kann, so dass sowohl an der ersten als auch an der zweiten Anschlussseite die Schulter als gleichsinnige Anschläge dienen können und mittels der Barrieren auch eine Zuführung beziehungsweise Hinleitung der Phasenleiter relativ zu der jeweiligen Phasenleiteraufnahme gleichsinnig erfolgt.

Dabei kann vorteilhaft vorgesehen sein, dass Barrieren und die Anlagefläche eine Führungsbahn bilden, welche eine axiale Zuführung des ersten Phasenleiters bewirkt.

Die Anlagefläche kann zusammen mit den sie flankierenden Barrieren eine Führungsbahn bilden, um den jeweiligen Phasenleiter zu der jeweiligen Schulter zu lenken und diese dort an der Phasenleiteraufnahme zur Anlage beziehungsweise zum Anschlag zu bringen. Dabei sollte die axiale Erstreckung der Barrieren zumindest gleich groß, bevorzugt größer sein als die zwischen den Barrieren zur Verfügung gestellte Anlagenfläche. So kann eine Phasenleiteraufnahme an der betreffenden Anschlussseite gebildet sein, in welche formkomplementär der jeweilige Phasenleiter einfahrbar ist. Durch die Formkomplementarität kann eine erhöhte Genauigkeit bei der Montage einer Schalteinrichtung erzielt werden.

Eine weitere vorteilhafte Ausgestaltung kann vorsehen, dass die Anschlussseiten an der Unterbrechereinheit axial beabstandet angeordnet sind und in radialer Richtung fortragen.

Eine radiale Ausrichtung der Anschlussseiten kann dabei insbesondere auf die Längsachse (axiale Richtung) der jeweiligen Unterbrechereinheit bezogen sein. Dabei können die Anschlussseiten diametral entgegengesetzt zueinander in der gleichen radialen Richtung angeordnet sein, jedoch mit entgegengesetztem Richtungssinn ausgerichtet sein. Die Anschlussseiten (bzw. die Anlageflächen) können dabei im Wesentlichen parallel zur axialen Richtung oder auch im Wesentlichen lotrecht zur axialen Richtung ausgerichtet sein. Bedarfsweise kann auch eine der Anschlussseiten (bzw. eine der Anlageflächen) lotrecht ausgerichtet sein und die andere Anschlussseite (bzw. andere Anlagefläche) kann parallel zur axialen Richtung ausgerichtet sein. Bevorzugt sollte die erste Anschlussseite (bzw. Anlagefläche) parallel zur axialen Richtung liegen. Insbesondere sollte die jeweilige Anlagefläche bevorzugt im Wesentlichen eben ausgebildet, lotrecht und/oder parallel zur axialen Richtung ausgerichtet sein. Bei einer wechselweisen Ausrichtung der Anlageflächen der beiden Anschlussseiten kann die notwendige Montage derart vereinfacht werden, dass durch ein Verkippen der Unterbrechereinheiten aus der axialen Richtung ein genaueres Zuführen der Phasenleiter relativ zu den Anlageflächen der Unterbrechereinheit vorgenommen werden kann. Durch die axiale Beabstandung der Anschlussseiten ist weiterhin die Möglichkeit gegeben, Toleranzen in einfacher Weise auszugleichen.

Vorteilhafterweise kann weiter vorgesehen sein, dass die Barrieren den ersten Phasenleiter an der ersten Anschlussseite in seiner tangentialen Bewegbarkeit stärker einschränken als die tangentiale Bewegbarkeit des zweiten Phasenleiters an der zweiten Anschlussseite eingeschränkt ist.

Durch die Nutzung unterschiedlicher Bewegbarkeiten der Phasenleiter relativ zu den Anschlussseiten kann in einfacher Weise zunächst ein Einführen und Annähern, z.B. des ersten Phasenleiters an der ersten Anschlussseite und Anlage an der Anlagefläche vorgenommen werden, und daraufhin folgend eine Kontaktierung beziehungsweise Einführung des zweiten Phasenleiters an der zweiten Anschlussseite und Anlage an der entsprechenden Anlagefläche vorzunehmen. Insbesondere in Kombination mit unterschiedlich orientierten Anlageflächen ist so ein vereinfachtes Ansetzen der Phasenleiter an die jeweilige Anschlussseite (insbesondere einem zeitgleichen Ansetzen) ermöglicht.

Weiterhin kann vorteilhaft vorgesehen sein, dass die Anschlussseiten mit entgegengesetztem Richtungssinn in einer radialen Richtung fortragen.

Ein Fortragen der Anschlussseite mit entgegengesetzter Richtung ermöglicht es, die Schalteinrichtung derart in einen Phasenleiterzug einzubinden, dass der Phasenleiterzug bei im Wesentlichen gleichbleibender Orientierung durch die Schalteinrichtung hindurchläuft. Somit kann die Schalteinrichtung in einfacher Weise beispielsweise in ein Übertragungskabel, eine Freileitung usw. eingeschleift werden. Bezüglich es entgegengesetzten Richtungssinns sind insbesondere die Anlageflächen entgegengesetzt zueinander ausgerichtet. Die Anlageflächen können zusätzlich zum entgegengesetzten Richtungssinn auch mit voneinander abweichenden Flächennormalen parallel oder lotrecht zur Längsachse (axiale Richtung) der Unterbrechereinheit ausgerichtet sein.

Vorteilhafterweise kann weiter vorgesehen sein, dass Schulter und Barrieren den ersten Phasenleiter dielektrisch schirmen.

Neben einem mechanischen Positionieren von Phasenleiter und Unterbrechereinheit unter Nutzung der Schulter sowie der Barrieren können diese auch genutzt werden, um die elektrische Schirmung des Phasenleiters vorzunehmen. Beispielsweise können die Schulter sowie die Barrieren gewölbte Vorsprünge bilden, in deren Schirmbereich zurückgezogen die Anlagefläche angeordnet ist. Neben einem mechanischen Schutz sowie einer Führung durch Schulter und Barrieren können bei einer entsprechenden elektrisch leitenden Ausgestaltung der Oberflächen auch Schirmfunktionen sowie Feldbeeinflussungen durch Schulter und Barrieren vorgenommen werden. Insbesondere bei der Nutzung von Armaturen zur Ausbildung der Anschlussseiten können Schulter und Barrieren beispielsweise an die Armaturen angeformt beziehungsweise eingeformt sein.

Vorteilhafterweise kann vorgesehen sein, dass ein Phasenleiter an einer Anlagefläche winkelstarr verspannt ist.

Bevorzugt kann die Anlagefläche im Wesentlichen parallel zur axialen Richtung der Unterbrechereinheit ausgerichtet sein. Die Schulter überspannt dabei den an der Anlagefläche anliegenden Phasenleiter, so dass dieser mechanisch bevorzugt auch dielektrisch zumindest abschnittsweise geschirmt ist. Der Phasenleiter ist dabei bevorzugt mit der Anlagefläche winkelstarr verbunden. Dabei kann beispielsweise ein Verbolzen, Verschweißen, Vernieten, Verkleben oder eine anderweitig geeignete Fügung vom Phasenleiter und Anlagefläche vorgesehen sein.

Weiterhin kann vorteilhaft vorgesehen sein, dass ein Phasenleiter mit einer Schulter winkelstarr verspannt ist.

Ein Phasenleiter kann unmittelbar mit der Schulter winkelstarr verspannt sein, so dass die Schulter selbst eine Positionierung des Phasenleiters übernimmt. Dabei kann die Schulter mit entsprechenden Barrieren ausgestattet sein, um z.B. den zweiten Phasenleiter in die Anlagefläche der Anschlussseite einfahren zu können. Die Anlagefläche kann an der Schulter selbst angeordnet sein, so dass eine elektrische Kontaktierung über die Schulter erfolgt.

Eine weitere vorteilhafte Ausgestaltung kann vorsehen, dass ein Phasenleiter an einem von der jeweiligen Anschlussseite abgewandten Ende eine bewegbare Kontaktanordnung, insbesondere eine Gleitkontaktanordnung, aufweist.

Unabhängig von der geometrischen Gestaltung von Schulter, Barriere und Anlagefläche auf der jeweiligen Anschlussseite ist der jeweilige Phasenleiter mit der jeweiligen Anschlussseite bevorzugt winkelstarr verbunden. Somit ist ein beliebiges Entfernen des Phasenleiters von der Unterbrechereinheit verhindert. An einem der jeweiligen Anschlussseite der Unterbrechereinheit abgewandten Ende kann der Phasenleiter eine bewegbare Kontaktanordnung aufweisen. Dies kann insbesondere eine Gleitkontaktanordnung sein, mittels welcher eine elektrische Kontaktierung des Phasenleiters ermöglicht ist. Durch eine derartige Gleitkontaktanordnung können beispielsweise innerhalb des Phasenleiters auftretende Dimensionsänderungen, beispielsweise hervorgerufen durch thermische Einwirkungen, wie Stromwärmeeffekte, ausgeglichen werden. Darüber hinaus ist über eine bewegbare Kontaktanordnung auch die Möglichkeit gegeben, in einfacher Form Abzweige auszubilden, wobei über die bewegbare Kontaktanordnung ein Auftreten von mechanischen Spannungen innerhalb des Abzweiges verhindert sind.

Vorteilhafterweise kann weiter vorgesehen sein, dass die bewegbare Kontaktanordnung zumindest teilweise an einem Isolator abgestützt ist.

Eine Anordnung einer bewegbaren Kontaktanordnung in der Nähe eines Isolators insbesondere durch eine zumindest teilweise Abstützung an dem Isolator ermöglicht es, Kräfte in der Nähe des Isolators entspannen zu lassen, wodurch Kräfte von dem Isolator ferngehalten werden. Insbesondere bei der Nutzung von Isolatoren zur Ausbildung einer fluiddichten Barriere innerhalb des Kapselungsgehäuses wird der Gefahr eines Isolatorbruches entgegengewirkt. Die Kontaktanordnung kann beispielsweise elektrisch leitend mit den den Isolator fluiddicht durchsetzenden Kontaktstücken verbunden sein. Eine zumindest teilweise Abstützung kann über die Kontaktstücke des Isolators erfolgen.

Im Folgenden wird ein Ausführungsbeispiel der Erfindung schematisch in einer Zeichnung gezeigt und nachfolgend näher beschrieben. Dabei zeigt die
- Figur 1: einen Querschnitt durch eine Schalteinrichtung in einer ersten Ebene, die
- Figur 2: einen Schnitt durch die aus der Figur 1 bekannte Schalteinrichtung in einer zweiten Ebene, die
- Figur 3: ein Detail einer ersten Anschlussseite sowie die
- Figur 4: ein Detail einer zweiten Anschlussseite.

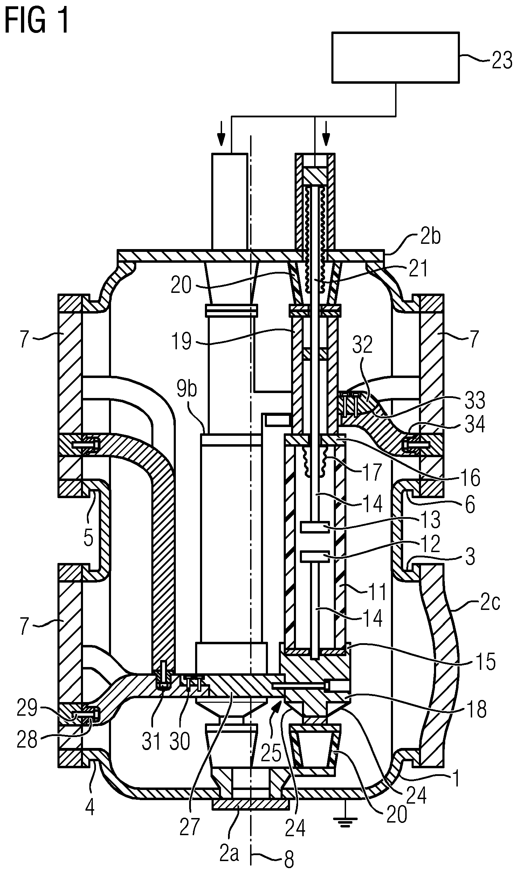

Die Figur 1 zeigt einen Querschnitt durch eine Schalteinrichtung. Die Schalteinrichtung weist ein Kapselungsgehäuse 1 auf. Das Kapselungsgehäuse 1 ist als fluiddichte Einhausung ausgelegt, so dass im Inneren des Kapselungsgehäuse 1 ein Fluid hermetisch eingeschlossen werden kann. Das Kapselungsgehäuse 1 weist einen Grundkörper auf, welcher im Wesentlichen ein metallischer Grundkörper ist, vorliegend handelt es sich um einen Gusskörper. Der Gusskörper ist im Wesentlichen hohlzylindrisch ausgebildet, wobei stirnseitig ein Verschluss des Grundkörpers mittels Deckeln 2a, 2b vorgesehen ist. Mantelseitig sind am Grundkörper des Kapselungsgehäuses 1 ein erster Flansch 3, ein zweiter Flansch 4, ein dritter Flansch 5 sowie ein vierter Flansch 6 angeordnet. Der erste Flansch 3 ist mittels eines Deckels 2c blind verschlossen. Der zweite Flansch 4 ist mittels eines Isolators 7 hermetisch verschlossen. Ebenso sind der dritte Flansch 5 sowie der vierte Flansch 6 durch einen Isolator 7 verschlossen. Die Isolatoren 7 sind dabei gleichartig aufgebaut und sind als sogenannte Durchführungsisolatoren ausgebildet, um einen Phasenleiterzug fluiddicht durch die jeweiligen Isolatoren 7 hindurch zu führen. Als solches verschließen die Isolatoren 7 das Kapselungsgehäuse 1. Die Isolatoren 7 sind dazu mit ringförmigen Anlageflächen versehen, um mit den jeweiligen zweiten, dritten beziehungsweise vierten Flansch 4, 5, 6 fluiddicht zur Anlage zu kommen. Auf der von dem jeweiligen Flansch 4, 5, 6 abgewandten Seite der Isolatoren 7 ist es möglich, weitere Kapselungsgehäuse anzuflanschen, um dort eine weitere Führung des Phasenleiterzuges vornehmen zu können.

Aufgrund der im Wesentlichen rohrförmigen Ausgestaltung des Kapselungsgehäuses 1 erstreckt sich dieses im Wesentlichen koaxial zu einer Längsachse 8. Parallel zur Längsachse 8 sind im Inneren des Kapselungsgehäuses umspült von einem dort eingeschlossenen elektrisch isolierenden Fluid drei Pole angeordnet. In der Figur 1 ist eine erste Unterbrechereinheit 9a teilweise im Schnitt dargestellt, welcher baugleich zu einer zweiten Unterbrechereinheit 9b ausgeführt ist. Die zweite Unterbrechereinheit 9b ist bzgl. der Schnittebene in Richtung der Sichtachse hinter die erste Unterbrechereinheit 9a zurückversetzt. Eine dritte Unterbrechereinheit ist ebenfalls zu der Ebene der ersten Unterbrechereinheit 9a versetzt angeordnet, jedoch liegt die Ebene in Betrachtungsrichtung der Figur 1 vor der ersten Unterbrechereinheit 9a. Die dritte Unterbrechereinheit ist dabei deckungsgleich zur zweiten Unterbrechereinheit 9b angeordnet. Somit ergibt sich in Richtung der Längsachse 8 gesehen eine Anordnung der drei Unterbrechereinheiten 9a, 9b, in den Eckpunkten eines Dreieckes.

Somit ist eine Schalteinrichtung gebildet, welche zur Schaltung von drei Polen eines Elektroenergieübertragungsnetzes einsetzbar ist. So ist es beispielsweise möglich, ein Dreiphasenwechselspannungssystem mittels der schematisch dargestellten Schalteinrichtung zu schalten. Die Unterbrechereinheiten 9a, 9b sind im Inneren des Kapselungsgehäuses 1 von einem elektrisch isolierenden Fluid umspült. Bei diesem Fluid kann es sich beispielsweise um einen fluorhaltigen Stoff wie beispielsweise Schwefelhexafluorid, Fluorketon, Fluornitril, Fluorolefin oder auch ein stickstoffhaltiges Fluid, insbesondere ein Gasgemisch, wie zum Beispiel ein Gemisch mit Stickstoff und Sauerstoff im Inneren des Kapselungsgehäuses 1 handeln.

Beispielhaft wird nunmehr der Aufbau der ersten Unterbrechereinheit 9a beschrieben, wobei die zweite Unterbrechereinheit 9b sowie die dritte Unterbrechereinheit einen gleichartigen Aufbau aufweisen. Die erste Unterbrechereinheit 9a weist eine Schaltstelle 10 auf. Die Schaltstelle 10 ist vorliegend in Form einer Vakuumschaltröhre ausgebildet. Innerhalb eines elektrisch isolierenden Rohrkörpers 11 sind ein erstes Schaltkontaktstück 12 sowie ein zweites Schaltkontaktstück 13 angeordnet. Die Schaltkontaktstücke 12, 13 sind jeweils auf einen Stiel 14 zentrisch in dem Röhrenkörper 11 positioniert. Stirnseitig ist der Röhrenkörper 11 von einer ersten Verschlussplatte 15 sowie einer zweiten Verschlussplatte 16 verschlossen. Durch den Verschluss des Rohrkörpers 11 mit Verschlussplatten 15, 16 ist ein weiterer hermetisch abgeschlossener Körper gebildet, in dessen Inneren ein Unterdruck nahe einem Vakuum vorherrscht. Somit ist die zwischen den Schaltkontaktstücken 12, 13 gebildete Schaltstrecke nahezu frei von Ladungsträgern, wodurch sich ein vorteilhaftes Löschen von Schaltlichtbögen ergibt. Der Stiel 14, welcher das erste Schaltkontaktstück 12 trägt, ist fluiddicht durch die erste Verschlussplatte 15 nach außen geführt. Der Stiel 14, welcher das zweite Schaltkontaktstück 13 trägt, ist fluiddicht durch die zugeordnete zweite Verschlussplatte 16 nach außen geführt. Dabei ist der Stiel 14 des ersten Schaltkontaktstückes 12 winkelstarr in die erste Verschlussplatte 15 eingesetzt. Der Stiel 14 des zweiten Schaltkontaktstückes 13 ist axial bewegbar in die zweite Verschlussplatte 16 eingesetzt. Dazu weist die zweite Verschlussplatte 16 einen reversibel verformbaren Abschnitt in Form eines Faltenbalges 17 auf. Um die Schaltstelle 10 innerhalb des Kapselungsgehäuses 1 zu positionieren, weist die erste Unterbrechereinheit 9a eine erste Anschlussseite 18 sowie eine zweite Anschlussseite 19 auf. Die erste Anschlussseite 18 sowie die zweite Anschlussseite 19 sind als elektrisch leitende Armaturen ausgebildet, so dass eine elektrisch leitfähige Kontaktierung der jeweiligen Stiele 14 des ersten beziehungsweise zweiten Schaltkontaktstückes 12, 13 mit der jeweiligen Anschlussseite 18, 19 gegeben ist. Über die erste Anschlussseite 18 beziehungsweise die zweite Anschlussseite 19 ist somit die Schaltstelle 10 elektrisch kontaktierbar. Vorliegend handelt es sich bei den beiden Anschlussseiten 18, 19 um metallische Gussköper, welche elektrisch leitend sowie mechanisch mit der Schaltstelle 10 der ersten Unterbrechereinheit 9a verbunden sind. An den von der Schaltstelle 10 abgewandten Seiten der ersten Anschlussseite 18 sowie der zweiten Anschlussseite 19 sind jeweils Stützisolatoren 20 angeordnet, mittels welcher die erste Unterbrechereinheit 9a zwischen Innenwandungsseiten des Kapselungsgehäuses 1 elektrisch isoliert abgestützt ist.

Bei den Stützisolatoren 20 handelt es sich vorliegend um Hohlisolatoren, welche im Wesentlichen eine kegelstumpfförmige Form aufweisen, wobei auf der zweiten Anschlussseite 19 eine elektrisch isolierende Schaltstange 21 den dortigen Stützisolator 20 durchsetzt. Die elektrisch isolierende Schaltstange 21 ist mit dem Stiel 14 verbunden, welcher das zweite Schaltkontaktstück 13 trägt. Dabei ist eine Verbindung mit dem Stiel 14 auf der Seite vorgesehen, welche von dem zweiten Schaltkontaktstück 13 abgewandt ist. Die Schaltstange 21 ihrerseits ist mit einem weiteren Faltenbalg 22, welcher einen reversibel verformbaren Abschnitt im Kapselungsgehäuse 1 bildet, verbunden. Außerhalb des Kapselungsgehäuses 1 ist ein Antrieb 23 angeordnet, welcher außerhalb des Kapselungsgehäuses 1 eine Antriebsbewegungen bereitstellt um eine Relativbewegung zwischen den Schaltkontaktstücken 12, 13 im Inneren des Kapselungsgehäuses 1 sowie im Inneren des Rohrkörpers 11 zu bewirken. Dazu ist der Antrieb 23 über eine kinematische Kette mit einem reversibel verformbaren Abschnitt (weiterer Faltenbalg 22) des Kapselungsgehäuses 1 verbunden, an welchem auch die elektrisch isolierende Schaltstelle 21 angesetzt ist, so dass eine Bewegung fluiddicht durch eine Wandung des Kapselungsgehäuses 1 hindurch übertragen werden kann.

Die erste Anschlussseite 18 beziehungsweise der Armaturkörper der ersten Anschlussseite 18 ist als Kühlkörper mit Kühlrippen 24 ausgebildet. Durch die Kühlrippen 24 wird die Oberfläche des Armaturkörpers der ersten Anschlussseite 18 vergrößert, wodurch Wärme über den Stiel 14, welcher das erste Schaltkontaktstück 12 trägt, aus dem Inneren der Schaltstelle 10 nach Außen übertragen werden kann. Die erste Anschlussseite 18 weist eine Anlagefläche 25 auf, welche im Wesentlichen eben ausgestaltet ist. Die Anlagefläche 25 ist dabei im Wesentlichen parallel zur Längsachse 8 ausgerichtet. Die Anlagefläche 25 weist weiterhin eine Ausnehmung 26 auf. Die Ausnehmung 26 ist dabei im Wesentlichen lotrecht zur Anlagefläche 25 ausgerichtet und schneidet bevorzugt die Längsachse der ersten Unterbrechereinheit 9a. Ein erster Phasenleiter 27 weist im Wesentlichen einen kreisförmigen Querschnitt auf, wobei eine Stirnseite des ersten Phasenleiters 27 an der Anlagefläche 25 zur Anlage gelangt und dort über einen Bolzen, welcher die Ausnehmung 26 durchdringt und in den ersten Phasenleiter 27 hineinragt, verschraubt und winkelstarr mit der Anlagefläche 25 der ersten Anschlussseite 18 winkelstarr verbunden und elektrisch kontaktiert ist. Der erste Phasenleiter 27 ist dabei zweiteilig ausgebildet, um eine vereinfachte Montage zu ermöglichen. An seinem von der Anlagefläche 25 abgewandtem Ende weist der erste Phasenleiter 27 eine Kontaktbuchse 28 auf, welche auf einem Kontaktbolzen 29 gleitend aufsitzt. Der Kontaktbolzen 29 ist dabei winkelstarr mit einem Kontaktstück (Durchführungsleiter) des den zweiten Flansch 5 verschließenden Isolators 7 getragen und mit diesem elektrisch kontaktiert. Somit besteht die Möglichkeit, den ersten Phasenleiter 27 ausgehend von der ersten Anschlussseite 18 bis zu einem Isolator 7 verlaufen zu lassen. Über ein Verbolzung 30 ist der erste Phasenleiter 27 in einen ersten Teilabschnitt sowie einen zweiten Teilabschnitt aufteilbar. Der erste Teilabschnitt ist dabei der Anlagefläche 25 der ersten Anschlussseite 18 zugewandt. Der zweite Teilabschnitt ist dem Kontaktbolzen 29 des Isolators 7 zugewandt. Vorliegend ist der erste Phasenleiter 27 mit einer weiteren Kontaktbuchse 31 versehen, um einen Abzweig zu bilden. In die weitere Kontaktbuche 31 greift ein Abzweig des ersten Phasenleiters 27 ein, welcher mit einem Kontaktstück des Isolators 7 der den dritten Flansch 5 fluiddicht verschließt, verbunden ist. Somit ist über den ersten Phasenleiter 27 eine elektrische Kontaktierung der ersten Anschlussseite 18 sowohl am Isolator 7 des zweiten Flansches 4 als auch am Isolator 7 des dritten Flansches 5 ermöglicht.

An der zweiten Anschlussseite 19 ist eine Schulter 32 angeordnet, welche in radialer Richtung bzgl. der Längsachse der ersten Unterbrechereinheit 9a fortragt. Die Lage ist dabei diametral gegenüberliegend zur ersten Anschlussseite 18 ausgerichtet. An einer Anlagefläche 33 ist ein zweiter Phasenleiter 34 winkelstarr angeschlagen und elektrisch leitend mit der zweiten Anschlussseite 19 verbunden. Der zweite Phasenleiter 34 ist dazu mittels Bolzen, die in Ausnehmungen in der Anlagefläche 33 der zweiten Anschlussseite 19 hineinragen, verbolzt und winkelstarr verbunden. Dabei ist die Anlagefläche 33 der zweiten Anschlussseite 19 im Wesentlichen lotrecht zur Längsachse 8 des Kapselungsgehäuses 1 beziehungsweise zur Längsachse der ersten Unterbrechereinheit 9a ausgerichtet. Somit sind die Anlageflächen 25, 33 der ersten Anschlussseite 18 beziehungsweise der zweiten Anschlussseite 19 im Wesentlichen rechtwinkelig zueinander ausgerichtet. Von der zweiten Anschlussseite 19 erstreckt sich der zweite Phasenleiter 34 zu dem Isolator 7, welcher den vierten Flansch 6 fluiddicht verschließt. Analog zur Gestaltung der Anlage des ersten Phasenleiters 27 an dem zugeordneten Isolator 7 des zweiten Flansches 4 ist der zweite Phasenleiter 34 mit einer Kontaktbuchse 28 versehen, welche gleitbeweglich auf einem Kontaktbolzen 29 aufsitzt. Der Kontaktbolzen 29 ist von dem Kontaktstück des zugehörigen Isolators 7 getragen und mit diesem elektrisch leitend kontaktiert.

Über den ersten beziehungsweise den zweiten Phasenleiter 27, 34 sind die erste Anschlussseite 18 beziehungsweise die zweite Anschlussseite 19 der ersten Unterbrechereinheit 9a in einen Phasenleiterzug einbindbar. Über die Anschlussseiten 18, 19 ist auch eine elektrische Kontaktierung der relativ zueinander bewegbaren Schaltkontaktstücke 12, 13 gegeben, so dass der erste sowie der zweite Phasenleiter 27, 34 miteinander elektrisch kontaktiert werden können oder voneinander elektrisch getrennt werden können. Dazu ist eine Relativbewegung der Schaltkontaktstücke 12, 13, initiiert durch den Antrieb 23, vonnöten.

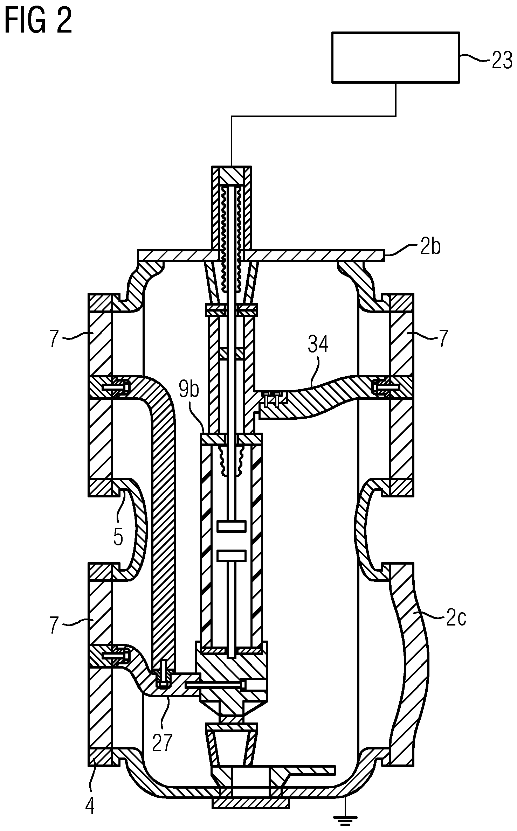

In der Figur 2 ist ein Querschnitt durch die aus der Figur 1 bekannte Schalteinrichtung gezeigt. Dabei ist die Schnittebene parallel zu der Schnittebene der Figur 1 ausgerichtet, wobei die Schnittebene nunmehr jedoch die zweite Unterbrechereinheit 9b schneidet. Zu erkennen ist, dass der Aufbau der beiden Unterbrechereinheiten 9a, 9b gleichartig ist. Lediglich durch den Versatz der Unterbrechereinheiten 9a, 9b zueinander ist eine alternative Ausgestaltung der Formgebung des jeweils anzuschließenden ersten Phasenleiters 27 beziehungsweise zweiten Phasenleiters 34 notwendig, da in den jeweiligen Isolatoren 7 auf einer Kreisbahn verteilt die entsprechenden Kontaktstücke angeordnet sind, zu welchen sich die jeweiligen ersten beziehungsweise zweiten Phasenleiter 27, 34 erstrecken. Gleiches gilt auch für die ersten beziehungsweise zweiten Phasenleiter 27, 34 der dritten Unterbrechereinheit, welche in den Figuren nicht explizit dargestellt ist.

Sowohl der ersten als auch der zweiten Unterbrechereinheit 9a, 9b als auch der dritten Unterbrechereinheit gemein ist die Ausgestaltung der jeweiligen ersten beziehungsweise zweiten Anschlussseiten 18, 19 mit ihren jeweiligen Anlageflächen 25, 33, an welche unabhängig von der jeweiligen Formgebung des ersten beziehungsweise zweiten Phasenleiters 27, 34 die Phasenleiter verbolzt werden.

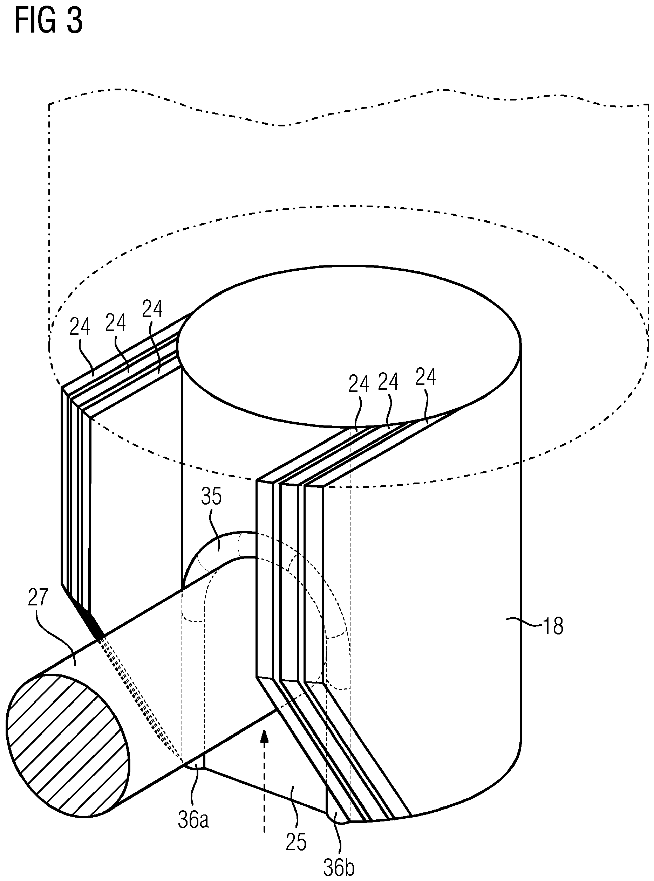

In der Figur 3 ist eine perspektivische Ansicht der ersten Anschlussseite 18 einer Unterbrechereinheit 9a, 9b gezeigt, an welcher ein erster Phasenleiter 27 bereits winkelstarr befestigt ist. In der perspektivischen Darstellung sind mehrere Kühlrippen 24 zu erkennen, welche im Wesentlichen parallel plattenartig ausgerichtet sind, wobei diese wiederum parallel zur Längsachse 8 ausgerichtet sind. Die Anlagefläche 25 der ersten Anschlussseite 18 ist von einer Schulter 35 begrenzt, welche gekrümmt formkomplementär zur Mantelfläche des festen Phasenleiters 27 ausgeformt ist. Die gekrümmte Schulter 35 geht dabei in Barrieren 36a, 36b über, welche im Wesentlichen parallel zur Längsachse 8 ausgebildet sind. Dadurch ist in Einfahrrichtung (unterbrochener Pfeil) eine beiderseitige Führung durch die Barrieren 36a, 36b gegeben, wobei diese den Phasenleiter 27 bei einer Relativbewegung zu der ersten Anschlussseite 18 der jeweiligen Unterbrechereinheit 9a, 9b zu der Schulter 35 hinführen. Die Schulter 35 begrenzt die Einfahrtiefe des ersten Phasenleiters 27 und positioniert dessen Gewindeausnehmung fluchtend zur Ausnehmung 26, welche in der Anlagefläche 25 der ersten Anschlussseite 18 mündet. Die Schulter 35 überspannt den Phasenleiter 27. Somit ist eine vereinfachte Montage beim Zusammenfügen des ersten Phasenleiters sowie der ersten Anschlussseite 18, respektive der jeweiligen Unterbrechereinheit 9a, 9b, gegeben.

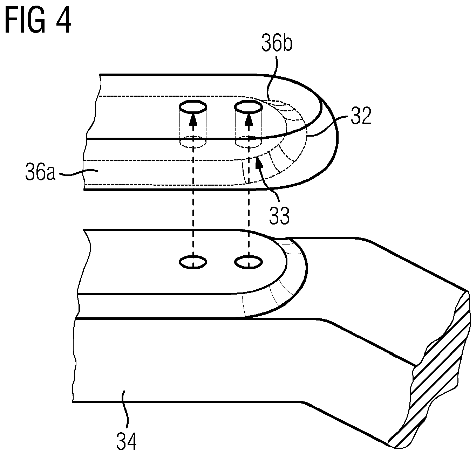

Die Figur 4 zeigt die Anlagefläche 33 der zweiten Anschlussseite 19, welche an der Schulter 32 angeordnet ist. Die Schulter 32 ist dabei derart ausgerichtet, dass diese die Anlagefläche 34 positioniert, wobei die im Wesentlichen ebene Anlagefläche 33 lotrecht zur Längsachse 28 ausgerichtet ist.

Insofern sind die Anlageflächen 25, 34 der ersten beziehungsweise zweiten Anschlussseite 18, 19 rechtwinklig zueinander orientiert. Die Schulter 32 der zweiten Anschlussseite 19 ist ebenfalls mit Barrieren 36a, 36b versehen. Die Barrieren 36a, 36b leiten einen formkomplementär ausgeformten Abschnitt des zweiten Phasenleiters 34 und zentrieren diesen auf der Anlagefläche 33. Dabei ist die Passung zu den Barrieren 36a, 36b an der Schulter 32 größer als die Passung zwischen dem ersten Phasenleiter 27 sowie der Anschlussfläche 25 beziehungsweise der Schulter 35 beziehungsweise den Barrieren 36a, 36b. Entsprechend kann bei einer Montage einer bereits zusammengesetzten Unterbrechereinheit 9a, 9b zunächst ein Einführen des ersten Phasenleiters 27 auf der ersten Anschlussseite 18 erfolgen. Mit Einführung des ersten Phasenleiters 27 kann der zweite Phasenleiter 34 an der Anlagefläche 33 an der Schulter 32 der zweiten Anschlussseite 19 zur Anlage gebracht werden.

Sowohl auf der ersten als auch auf der zweiten Anschlussseite 18, 19 sind die jeweiligen Anschlussfläche 25, 33 von der jeweiligen Schulter 35, 32 überragt; und zwar derart, dass, bezogen auf die axiale Erstreckung (zum Beispiel Längsachse 8) die Schultern 35, 32 den jeweiligen Phasenleiter 27, 34 gleichsinnig überragen, so dass sowohl für den ersten als auch für den zweiten Phasenleiter 27, 34 mit gleichem Richtungssinn aus gleicher Richtung ein Anschlag gegeben ist. Bedarfsweise kann dabei die Anlagefläche 25 winklig zur Schulter 35 ausgerichtet sein. Es kann jedoch auch vorgesehen sein, dass die Schulter 32 die Anlagefläche 33 trägt. Zwischen dem jeweiligen Phasenleiter 27, 34 und der jeweiligen Anlagefläche 25, 33 ist ein winkelstarrer Verbund gebildet, so dass die Phasenleiter über die Anschlussseiten 18, 19 der jeweiligen Unterbrechereinheit 9a, 9b winkelstarr zueinander positioniert sind. Die Barrieren 36a, 36b führen/leiten den jeweiligen Phasenleiter 27, 34 zu seiner Montageposition an der jeweiligen Anlagefläche 25, 33.

Sowohl die Schultern 32, 35 als auch die Barrieren 36a, 36b weisen eine elektrisch leitende Oberfläche auf, so dass ein Fügespalt zwischen der jeweiligen Anlagefläche 25, 33 sowie dem jeweiligen Phasenleiter 27, 34 dielektrisch geschirmt ist. Somit wird durch die Schultern 32, 35 sowie die Barrieren 36a, 36b zum einen eine Montagehilfe bereitgestellt, welche ein Zusammenfügen der Schalteinrichtungen erleichtert, zum anderen wird diese Montagehilfe genutzt, um die dielektrische Stabilität der Unterbrechereinheiten 9a, 9b und somit der Schalteinrichtung zu erhöhen.

## Patentansprüche

1. Schalteinrichtung aufweisend eine von einem Kapselungsgehäuse (1) umgebene Unterbrechereinheit (9a,9b) mit einer Schaltstelle, die zwischen einer ersten Anschlussseite (18) und einer zweiten Anschlussseite (19) angeordnet ist, wobei sich ein erster Phasenleiter (27) von der ersten Anschlussseite (18) zu einem Isolator (7) erstreckt und sich ein zweiter Phasenleiter (34) von der zweiten Anschlussseite (19) zu einem Isolator (7) erstreckt,
**dadurch gekennzeichnet, dass**
die erste und die zweite Anschlussseite (18,19) eine Phasenleiteraufnahme mit einer in einer axialen Richtung (8) den jeweiligen Phasenleiter (27,34) überspannenden Schulter (32,35) aufweist und die Schulter (35) der ersten Anschlussseite (18) von flankierenden Barrieren (36a,36b) begrenzt ist, wobei zwischen Schulter (35) und Barrieren (36a,36b) ein Anlagefläche (25,33) für den ersten Phasenleiter (27) angeordnet ist.

2. Schalteinrichtung nach Anspruch 1,
**dadurch gekennzeichnet, dass**
die Schultern (32,35) der ersten und der zweiten Anschlussseite (18,19) in axialer Richtung (8) die jeweiligen Phasenleiter (27,34) gleichsinnig überspannen.

3. Schalteinrichtung nach Anspruch 1 oder 2,
**dadurch gekennzeichnet, dass**
Barrieren (36a,36b) und die Anlagefläche (25) eine Führungsbahn bilden, welche eine axiale Zuführung des ersten Phasenleiters bewirkt.

4. Schalteinrichtung nach Anspruch 1 bis 3,
**dadurch gekennzeichnet, dass**
die Anschlussseiten (18,19) an der Unterbrechereinheit (9a,9b) axial beabstandet angeordnet sind und in radialer Richtung fortragen.

5. Schalteinrichtung nach einem der Ansprüche 1 bis 4,
**dadurch gekennzeichnet, dass**
die Barrieren (36a,36b) den ersten Phasenleiter (27) an der ersten Anschlussseite (18) in seiner tangentialen Bewegbarkeit stärker einschränken als die tangentiale Bewegbarkeit des zweiten Phasenleiters (34) an der zweiten Anschlussseite (19) eingeschränkt ist.

6. Schalteinrichtung nach Anspruch 1 bis 5,
**dadurch gekennzeichnet, dass**
die Anschlussseiten (18,19) mit entgegengesetztem Richtungssinn in einer radialen Richtung fortragen.

7. Schalteinrichtung nach einem der Ansprüche 1 bis 6,
**dadurch gekennzeichnet, dass**
Schulter (35) und Barrieren (36a,36b) den ersten Phasenleiter (27) dielektrisch schirmen.

8. Schalteinrichtung nach einem der Ansprüche 1 bis 7,
**dadurch gekennzeichnet, dass**
ein Phasenleiter (27,34) an eine Anlagefläche (25,33) winkelstarr verspannt ist.

9. Schalteinrichtung nach einem der Ansprüche 1 bis 8,
**dadurch gekennzeichnet, dass**
ein Phasenleiter (34) mit einer Schulter (27,32) winkelstarr verspannt ist.

10. Schalteinrichtung nach einem der Ansprüche 1 bis 9,
**dadurch gekennzeichnet, dass**
ein Phasenleiter (27,34) an einem von der jeweiligen Anschlussseite (18,19) abgewandten Ende eine bewegbare Kontaktanordnung, insbesondere eine Gleitkontaktanordnung (28,29), aufweist.

11. Schalteinrichtung nach Anspruch 10,
**dadurch gekennzeichnet, dass**
die bewegbare Kontaktanordnung (28,29) zumindest teilweise an einem Isolator (7) abgestützt ist.

## Claims

1. Switching device having an interrupter unit (9a, 9b) surrounded by a capsule housing (1) with a switching point which is arranged between a first connection site (18) and a second connection side (19), a first phase conductor (27) extending from the first connection side (18) to an insulator (7), and a second phase conductor (34) extending from the second connection side (19) to an insulator (7),
**characterized in that**
the first and the second connection side (18, 19) have a phase conductor receptacle with a shoulder (32, 35) straddling the respective phase conductor (27, 34) in an axial direction (8), and the shoulder (35) of the first connection side (18) is delimited by flanking barriers (36a, 36b), wherein a contact surface (25, 33) for the first phase conductor (27) is arranged between the shoulder (35) and barriers (36a, 36b).

2. Switching device according to Claim 1,
**characterized in that**
the shoulders (32, 35) of the first and the second connection side (18, 19) straddle the respective phase conductors (27, 34) in the same direction in the axial direction (8).

3. Switching device according to Claim 1 or 2,
**characterized in that**
the barriers (36a, 36b) and the contact surface (25) form a guide path, which feeds the first phase conductor in axially.

4. Switching device according to Claims 1 to 3,
**characterized in that**
the connection sides (18, 19) on the interrupter unit (9a, 9b) are arranged to be spaced apart axially and extend away in the radial direction.

5. Switching device according to one of Claims 1 to 4,
**characterized in that**
the barriers (36a, 36b) restrict the first phase conductor (27) on the first connection side (18) more highly in its tangential mobility than the tangential mobility of the second phase conductor (34) on the second connection side (19) is restricted.

6. Switching device according to Claims 1 to 5,
**characterized in that**
the connection sides (18, 19) extend away in a radial direction with the opposite sense.

7. Switching device according to one of Claims 1 to 6,
**characterized in that**
the shoulder (35) and barriers (36a, 36b) shield the first phase conductor (27) dielectrically.

8. Switching device according to one of Claims 1 to 7,
**characterized in that**
a phase conductor (27, 34) is clamped to a contact surface (25, 33) at a rigid angle.

9. Switching device according to one of Claims 1 to 8,
**characterized in that**
a phase conductor (34) with a shoulder (27, 32) is clamped at a rigid angle.

10. Switching device according to one of Claims 1 to 9,
**characterized in that**
a phase conductor (27, 34) has a movable contact arrangement, in particular a sliding contact arrangement (28, 29), at an end facing away from the respective connection side (18, 19).

11. Switching device according to Claim 10,
**characterized in that**
the movable contact arrangement (28, 29) is at least partly supported on an insulator (7).

## Revendications

1. Dispositif de coupure comportant une unité (9a, 9b) d'interrupteur entourée d'un boîtier (1) de blindage et ayant un point de coupure, qui est disposé entre un premier côté (18) de connexion et un deuxième côté (19) de connexion, dans lequel un premier conducteur (27) de phase s'étend du premier côté (18) de connexion à un isolateur (7) et un deuxième conducteur (34) de phase s'étend du deuxième côté (19) de connexion à un isolateur (7),
**caractérisé en ce que**
le premier et le deuxième côté (18, 19) de connexion a un logement de conducteur de phase ayant un épaulement (32, 35) recouvrant dans une direction (8) axiale le conducteur (27, 34) de phase respectif et l'épaulement (35) du premier côté (18) de connexion est délimité par des barrières (36a, 36b) de flanc, dans lequel une surface (25, 33) de contact pour le premier conducteur (27) de phase est disposée entre l'épaulement (35) et les barrières (36a, 36b).

2. Dispositif de coupure suivant la revendication 1,
**caractérisé en ce que**
les épaulements (32, 35) du premier et du deuxième côté (18, 19) de connexion recouvrent, dans le même sens, dans la direction (8) axiale, les conducteurs (27, 34) de phase respectifs.

3. Dispositif de coupure suivant la revendication 1 ou 2,
**caractérisé en ce que**
les barrières (36a, 36b) et la surface (25) de contact forment une voie de guidage, qui provoque un guidage axial du premier conducteur de phase.

4. Dispositif de coupure suivant la revendication 1 à 3,
**caractérisé en ce que**
les côtés (18, 19) de connexion sont disposés sur l'unité (9a, 9b) d'interrupteur en étant à distance axialement et font saillie dans la direction radiale.

5. Dispositif de coupure suivant l'une des revendications 1 à 4,
**caractérisé en ce que**
les barrières (36a, 36b) limitent le premier conducteur (27) de phase du premier côté (18) de connexion dans sa possibilité de déplacement tangentiel plus fortement que n'est limitée la possibilité de déplacement tangentiel du deuxième conducteur (34) de phase du deuxième côté (19) de connexion.

6. Dispositif de coupure suivant la revendication 1 à 5,
**caractérisé en ce que**
les côtés (18, 19) de connexion font saillie dans un sens opposé dans une direction radiale.

7. Dispositif de coupure suivant l'une des revendications 1 à 6,
**caractérisé en ce que**
l'épaulement (35) et les barrières (36a, 36b) protègent diélectriquement le premier conducteur (27) de phase.

8. Dispositif de coupure suivant l'une des revendications 1 à 7,
**caractérisé en ce qu'**
un conducteur (27, 34) de phase est bloqué d'une manière fixe angulairement sur une surface (25, 33) de contact.

9. Dispositif de coupure suivant l'une des revendications 1 à 8,
**caractérisé en ce qu'**
un conducteur (34) de phase est bloqué d'une manière fixe angulairement par un épaulement (27, 32).

10. Dispositif de coupure suivant l'une des revendications 1 à 9,
**caractérisé en ce qu'**
un conducteur (27, 34) de phase a, à une extrémité non tournée vers le côté (18, 19) de connexion respectif, un agencement de contact mobile, notamment un agencement (28, 29) de contact glissant.

11. Dispositif de coupure suivant la revendication 10,
**caractérisé en ce que**
l'agencement (28, 29) de contact mobile est appuyé au moins en partie sur un isolateur (7).
